# FASCICULE DE BREVET EUROPEEN

(11) **EP 0 697 327 B1**
(45) Date de publication et mention de la délivrance du brevet: **15.04.1998**
(21) Numéro de dépôt: 95401360.3
(22) Date de dépôt: 12.06.1995
(51) Int. Cl.: B62D 43/04

(54) **Ensemble d'arrimage d'un panier de roue de secours de véhicule automobile**
Festhaltevorrichtung für den Reserveradkorb eines Kraftfahrzeugs
Securing unit for the spare wheel crate of a motor vehicle

(30) Priorité: 18.08.1994 FR 9410122
(43) Date de publication de la demande: 21.02.1996
(73) Titulaire: AUTOMOBILES PEUGEOT, 75116 Paris (FR); AUTOMOBILES CITROEN, 92200 Neuilly-sur-Seine (FR)
(72) Inventeur: Getin, Philippe, F-29800 La Forest Landernau (FR)
(74) Mandataire: Polus, Camille

(56) Documents cités:
- EP-A- 0 001 725
- FR-A- 2 243 594
- FR-A- 2 638 697
- FR-A- 2 675 762
- PATENT ABSTRACTS OF JAPAN vol. 5 no. 112 (M-079) ,21 Juillet 1981 & JP-A-56 053968 (NISSAN) 13 Mai 1981,

## Description

La présente invention concerne un ensemble d'arrimage d'un panier de roue de secours de véhicule automobile.

Les paniers de roue de secours sont généralement montés basculants sous le plancher du véhicule de manière à permettre le retrait et la mise en place de la roue.

Ces paniers sont arrimés habituellement au moyen d'un dispositif à crochet disposé sous le plancher du véhicule. Le crochet est destiné à saisir une extrémité libre du panier.

Ce type de dispositif a pour inconvénient qu'après la mise en place de la roue de secours, l'accrochage du panier est peu commode du fait du poids de la roue et de la difficulté d'accès à ce panier et au crochet d'arrimage.

On a donc proposé, par exemple dans FR-A-2 638 697 un ensemble d'arrimage d'un panier de roue de secours comprenant un crochet d'arrimage et un dispositif d'orientation et de guidage de ce crochet facilitant sa manoeuvre.

Cependant, cet ensemble est relativement fragile et en cas de rupture du crochet d'arrimage, le panier n'est plus retenu et bascule accidentellement.

De plus, le crochet d'arrimage coopérant par vissage avec une vis de commande traversant le plancher du véhicule, en cas de dévissage excessif de cette vis, le crochet d'arrimage se sépare de celle-ci, provoquant un basculement inopiné du panier.

On a également proposé, par exemple dans FR-A-2 675 762, un ensemble d'arrimage d'un panier de roue de secours de véhicule automobile monté basculant sous le plancher du véhicule, du type comprenant un crochet principal d'accrochage d'une extrémité libre du panier, s'étendant sous le plancher du véhicule, déplaçable verticalement en coopérant par vissage avec un organe de commande traversant le plancher, et un crochet auxiliaire d'aide à la manoeuvre du panier, fixé sous le plancher.

Cependant, cet ensemble ne donne pas satisfaction car son maniement n'est pas suffisamment commode.

L'invention a pour but de proposer un ensemble d'arrimage de panier de roue de secours qui soit sûr, simple et commode à manoeuvrer, permettant notamment de retenir le panier en cas de rupture du crochet d'arrimage.

A cet effet, l'invention a pour objet un ensemble d'arrimage d'un panier de roue de secours de véhicule automobile, du type précité caractérisé en ce que le crochet principal est emboîté dans le crochet auxiliaire en étant déplaçable verticalement par rapport à ce dernier, entre une position haute d'arrimage du panier et une position basse dans laquelle l'extrémité d'accrochage du crochet principal est en appui sur l'extrémité d'accrochage du crochet auxiliaire.

Suivant d'autres caractéristiques de l'invention:
- le crochet auxiliaire est déplaçable par basculement élastique entre une position de repos sensiblement verticale d'activation des crochets principal et auxiliaire , et une position inclinée d'escamotage de ces crochets , l'organe de commande s'étendant à travers une ouverture oblongue de basculement de cet organe ménagée dans le plancher;
- l'extrémité d'accrochage du crochet auxiliaire délimite une rampe d'escamotage destinée à coopérer avec l'extrémité libre du panier lors de l'accrochage de celle-ci dans le crochet principal;
- le crochet auxiliaire comprend une tige métallique pliée en épingle à cheveux comportant deux branches entre lesquelles est emboîté le crochet principal, les extrémités libres des branches formant des pattes de fixation du crochet auxiliaire sous le plancher, les branches étant reliées entre elles par une boucle de liaison formant extrémité d'accrochage;
- les pattes de fixation sont reliées au reste du crochet auxiliaire par des coudes de fléchissement permettant le basculement élastique de ce crochet;
- chaque branche comporte deux tronçons axiaux, supérieur et inférieur, décalés transversalement, destinés à coopérer avec des contours complémentaires du crochet principal pour guider axialement celui-ci;
- les tronçons axiaux inférieurs sont destinés à coopérer avec des flancs axiaux délimitant le corps du crochet principal, séparés par une arête axiale s'étendant entre les branches du crochet auxiliaire, de manière à immobiliser le crochet principal en rotation autour de son axe de vissage/dévissage;
- les tronçons axiaux inférieurs sont convergents vers l'extrémité d'accrochage du crochet auxiliaire, de manière à renforcer l'immobilisation en rotation du crochet principal;
- les tronçons axiaux supérieurs et inférieurs sont reliés entre eux par des tronçons transversaux destinés à coopérer avec des bords plats délimitant les flancs axiaux, de manière à renforcer l'immobilisation en rotation du crochet principal;
- l'extrémité d'accrochage du crochet principal comporte une saillie de centrage, prolongeant l'arête axiale, destinée à s'emboîter entre les branches du crochet auxiliaire;
- la boucle de liaison comprend une anse principale formant la rampe d'escamotage du crochet auxiliaire, reliée aux deux branches par deux anses secondaires s'étendant à l'extérieur de l'espace médian séparant les deux branches, formant des doigts d'accrochage prolongeant la rampe d'escamotage;
- les pattes de fixation sont destinées à être fixées sous le plancher par serrage entre une bride formant plaque et le dessous du plancher, notamment au moyen d'un boulon traversant le plancher et la plaque;
- l'organe de commande s'étend à travers une ouverture oblongue de basculement ménagée dans la bride, coïncidant avec l'ouverture oblongue du plancher;
- le crochet principal est fabriqué d'une seule pièce, en fonte; par moulage ou forgeage.

L'invention sera mieux comprise à la lecture de la description qui va suivre donnée uniquement à titre d'exemple pour la compréhension de laquelle on se réfèrera aux dessins annexés dans lesquels:
- la figure 1 est une vue schématique en élévation d'un panier de roue de secours de véhicule automobile arrimé sous le plancher de ce véhicule au moyen d'un ensemble selon l'invention;
- la figure 2 est une vue éclatée en perspective de l'ensemble d'arrimage représenté à la figure 1;
- la figure 3 est une vue en perspective du crochet auxiliaire de l'ensemble d'arrimage représenté à la figure 1;
- les figures 4 à 8 sont des vues en perspective de l'ensemble d'arrimage représenté à la figure 1, dans différentes positions d'utilisation, les trois dernières figures étant à échelle réduite par rapport aux deux figures précédentes.

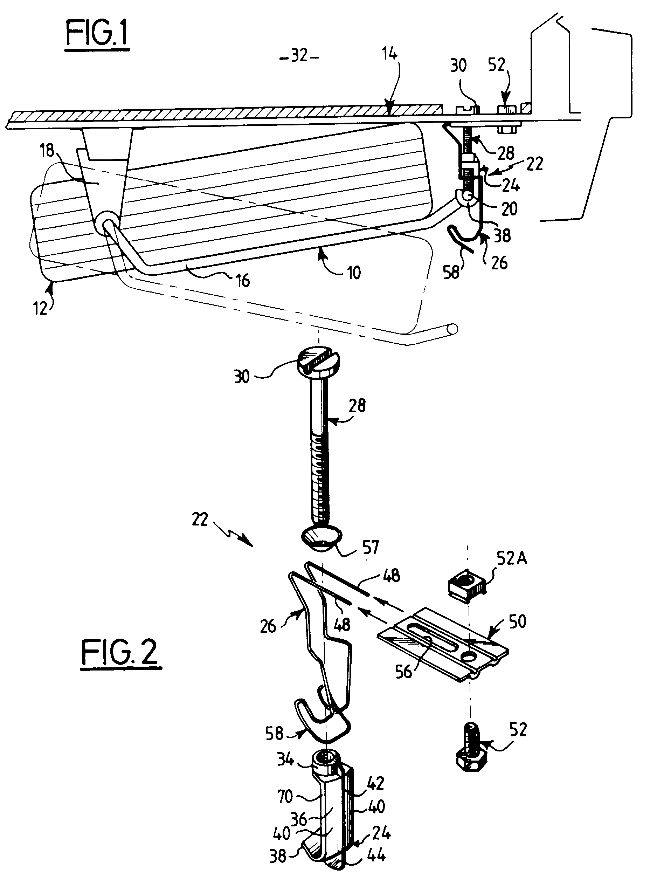

On a représenté sur la figure 1 un panier 10 de roue de secours 12 de véhicule automobile monté basculant sous le plancher 14 du véhicule, entre une position de rangement de la roue 12, représentée en trait plein sur la figure 1, et une position d'accès à cette roue 12, représentée en traits mixtes sur la figure 1.

Le panier 10 comporte, de façon classique, un corps en fil d'acier plié en épingle à cheveux, muni de deux branches 16 dont les extrémités libres sont articulées autour de l'axe de basculement du panier sur des flasques 18 fixés sous le plancher 14.

L'extrémité de liaison 20 des branches 16, délimitant l'extrémité libre du panier 10, est destinée à être arrimée sous le plancher 14 au moyen d'un ensemble d'arrimage 22 selon l'invention.

En se réfèrant aux figure 1 et 2, on voit que l'ensemble d'arrimage 22 comprend un crochet principal 24 d'accrochage de l'extrémité libre 20 du panier 10, fabriqué de préférence en une seule pièce en fonte par moulage ou forgeage, s'étendant sous le plancher 14, et un crochet auxiliaire 26 d'aide à la manoeuvre du panier 10, fabriqué de préférence en fil d'acier plié en épingle à cheveux, fixé sous le plancher 14.

Le crochet principal 24 est déplaçable verticalement en coopérant par vissage avec une vis 28 traversant le plancher 24 de manière que sa tête 30, en appui sur le dessus du plancher 14, soit accessible depuis l'intérieur du coffre 32 du véhicule.

Le crochet principal 24 comporte un corps 36 muni d'une extrémité supérieure 34 de liaison avec la vis de commande 28 et d'une extrémité inférieure recourbée 38 d'accrochage.

L'extrémité de liaison 34 a une forme générale cylindrique et comporte un orifice taraudé axial dans lequel est vissée la vis de commande 28.

Le corps 36 est délimité par deux flancs axiaux 40, opposés à l'extrémité recourbée 38, séparés par une arête axiale 42.

L'extrémité d'accrochage 38 comporte une saillie 44, prolongeant l'arête axiale 42, destinée à coopérer avec le crochet auxiliaire 26 comme cela sera décrit ultérieurement.

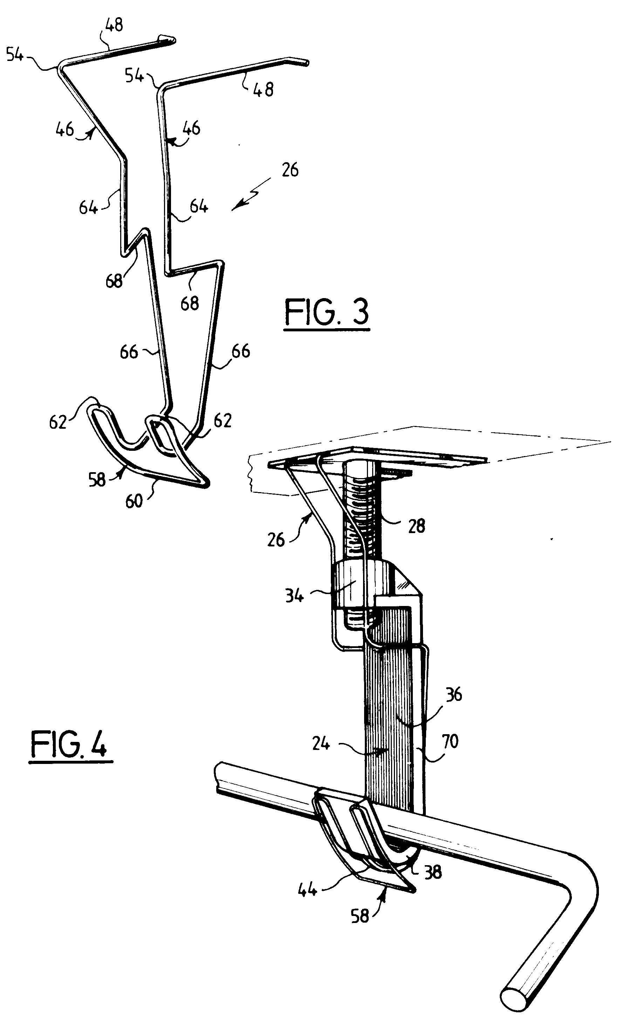

Comme on peut le voir sur la figure 3, le crochet auxiliaire 26 comporte deux branches 46 entre lesquelles le crochet principal 24 est destiné à être emboîté.

Les extrémités libres des branches 46 forment des pattes 48, sensiblement horizontales, destinées à être fixées sous le plancher 46 par serrage entre une bride formant plaque de fixation 50 et le dessous du plancher 14. Le serrage est réalisé par exemple au moyen d'un boulon 52 à écrou à cage 52A de type connu, traversant le plancher 14 et la plaque 50, comme cela est représenté aux figures 1 et 2.

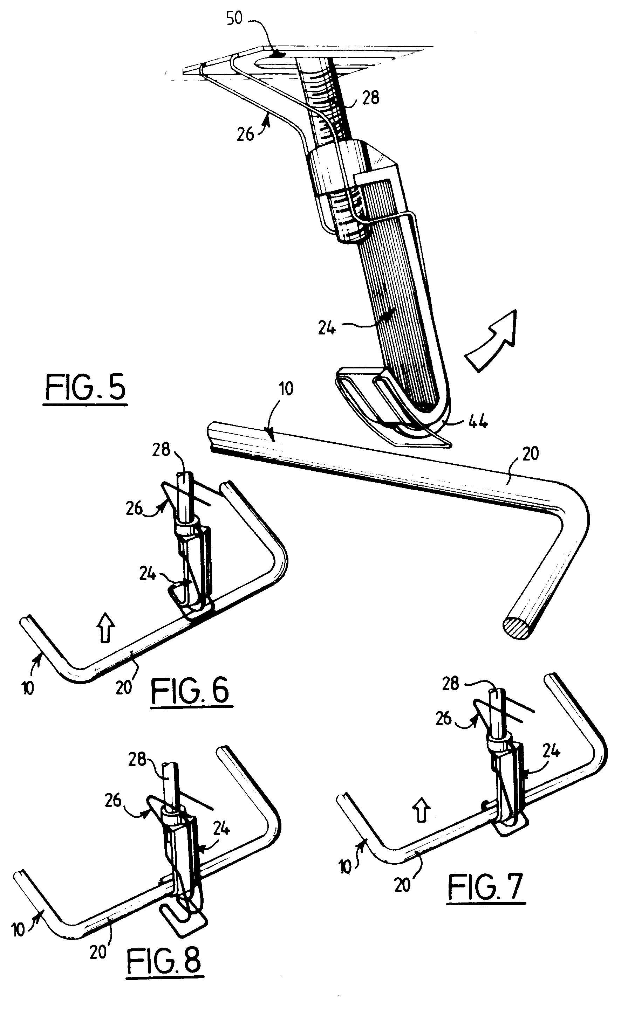

Les pattes de fixation 48 sont reliées au reste du crochet auxiliaire 26 par des coudes de fléchissement 54 permettant un basculement élastique du crochet auxiliaire 26 sensiblement autour de l'axe d'alignement de ces coudes 54, entre une position de repos sensiblement verticale d'activation des crochets principal 24 et auxiliaire 26, telle que représentée par exemple à la figure 1, et une position inclinée d'escamotage de ces crochets 24, 26, telle que représentée par exemple à la figure 5.

La vis de commande 28, reliée au crochet principal 24, lui-même emboîté dans le crochet auxiliaire 26, est susceptible de basculer solidairement avec ce crochet auxiliaire 26 et s'étend à travers des ouvertures oblongues de basculement ménagées de manière à coïncider l'une avec l'autre dans le plancher 14 et la bride 50. On notera que seule l'ouverture oblongue de passage 56 est représentée sur les dessins, à la figure 2.

De préférence, une rondelle de serrage 57 de type connu, par exemple conique en plastique, est interposée entre les faces en contact de la tête 30 de la vis 28 et du plancher.

En se référant à nouveau à la figure 3, on voit que les branches 46 du crochet auxiliaire 26 sont reliées entre elles par une boucle de liaison 58, repliée vers les extrémités libres 48 de ces branches, de manière à former une extrémité d'accrochage.

La boucle de liaison 58 comprend une anse principale 60, formant une rampe d'escamotage du crochet auxiliaire 26, destinée à coopérer avec l'extrémité libre 20 du panier, lors de l'accrochage de ce dernier, comme cela sera précisé plus en détail ultérieurement.

L'anse principale 60 est reliée aux deux branches 46 par deux anses secondaires 62 s'étendant à l'extérieur de l'espace médian séparant les deux branches 46. Les anses secondaires 62 forment des doigts d'accrochage de l'extrémité libre 20 du panier et prolongent la rampe d'escamotage 60.

Le crochet principal 24, emboîté dans le crochet auxiliaire 26, est déplaçable verticalement par rapport à ce dernier, par rotation de la vis de commande 28, entre une position haute d'arrimage du panier 10, représentée aux figures 1 et 8, et une position basse, représentée aux figures 4 et 7, dans laquelle l'extrémité d'accrochage 38 du crochet principal 24 est en appui sur l'extrémité d'accrochage 58 du crochet auxiliaire 26.

Le crochet principal 24 est guidé axialement dans le crochet auxiliaire 26 et immobilisé en rotation par rapport à son axe de vissage/dévissage par des moyens qui seront décrits ci-dessous en se référant aux figures 3 à 8.

Sur ces figures, on voit que chaque branche 46 comporte deux tronçons axiaux, supérieur 64 et inférieur 66, décalés transversalement, destinés à coopérer avec des contours complémentaires du crochet principal 24 pour guider axialement ce dernier.

Les tronçons axiaux supérieurs 64 sont destinés à coopérer avec le contour de l'extrémité de liaison 34 du crochet principal 24.

Les tronçons axiaux inférieurs 66 sont destinés à coopérer avec les flancs axiaux 40 du crochet principal 24, l'arête 42 de ce crochet étant emboîtée entre ces tronçons axiaux inférieurs 66. Cet agencement permet l'immobilisation du crochet principal 24 en rotation autour de son axe de vissage/dévissage, les tronçons axiaux inférieurs 66 étant de préférence convergents vers l'extrémité d'accrochage 58 du crochet auxiliaire 26 de manière à renforcer cette immobilisation en rotation.

Dans un même but d'immobilisation en rotation du crochet principal 24, les tronçons axiaux supérieurs 64 et inférieurs 66 sont reliés entre eux par des tronçons transversaux 68 sensiblement horizontaux destinés à coopérer avec des bords plats 70 délimitant latéralement les flancs axiaux 40 du crochet principal 24.

La saillie 44 du crochet principal 24 est destinée à s'emboîter entre les branches 46 du crochet auxiliaire 26, de manière à centrer le crochet principal 24 par rapport au crochet auxiliaire 26 lorsque l'extrémité d'accrochage 38 du premier crochet 24 est en appui sur l'extrémité d'accrochage 58 du second crochet 26.

Le fonctionnement de l'ensemble d'arrimage 10 selon l'invention est très simple.

Lorsque le panier 10 est arrimé en position de rangement de la roue de secours 12, comme cela est représenté en trait plein sur la figure 1, l'extrémité d'accrochage 38 du crochet principal 24 est écartée en hauteur de l'extrémité d'accrochage 58 du crochet auxiliaire 26.

Pour récupérer la roue de secours 12 logée dans le panier 10, on dévisse la vis de commande 28 en manoeuvrant sa tête 30 à l'intérieur du coffre 32, ce qui provoque la descente du crochet principal 24, jusqu'à ce que l'extrémité d'accrochage 38 de ce dernier vienne en appui sur l'extrémité d'accrochage 58 du crochet auxiliaire 26, comme cela est représenté à la figure 4.

La poursuite du dévissage de la vis 28 provoque le soulèvement de la tête 30 par rapport au plancher 14 ce qui indique clairement à l'opérateur que le dévissage est suffisant pour pouvoir libérer le panier 10. On évite ainsi un dévissage excessif de la vis de commande risquant de provoquer la séparation accidentelle de cette vis et du crochet principal.

Pour dégager l'extrémité libre 20 du panier de l'ensemble d'arrimage 22, on soulève cette extrémité et on escamote le crochet auxiliaire 26 en sollicitant la boucle d'extrémité 58 à l'encontre de la force élastique de rappel du crochet auxiliaire 26, comme cela est représenté à la figure 5.

L'extrémité libre 20 du panier 10 est ensuite posée sur le sol afin d'extraire la roue de secours 12 du panier, comme cela est représenté en traits mixtes sur la figure 1.

Pour arrimer le panier 10 après y avoir replacé une roue 12, on soulève ce panier de manière que son extrémité libre 20 vienne en contact avec la rampe 60 du crochet auxiliaire 26. La poursuite du soulèvement de l'extrémité libre 20 du panier provoque d'abord l'escamotage du crochet auxiliaire 26, puis, celui-ci étant rappelé élastiquement vers sa position verticale de repos, l'accrochage de l'extrémité libre 20 dans le crochet principal 24, comme cela est représenté aux figures 6 et 7.

L'arrimage du panier 10 est achevé en vissant la vis de commande 28 de manière à soulever l'extrémité d'accrochage 38 du crochet principal 24, portant l'extrémité libre 20 du panier, par rapport à l'extrémité d'accrochage 58 du crochet auxiliaire 26, jusqu'à ce que la roue 12 soit immobilisée entre le panier et le plancher 14, comme cela est représenté aux figures 1 et 8.

L'invention comporte de nombreux avantages.

En particuler, l'ensemble d'arrimage selon l'invention est sûr, simple et commode à manoeuvrer .

En cas de rupture accidentelle du crochet principal, le panier est retenu par le crochet auxiliaire.

La tête de la vis de commande se soulevant par rapport au plancher lorsque l'extrémité d'accrochage du crochet principal est en appui sur l'extrémité d'accrochage du crochet auxiliaire, l'opérateur peut facilement vérifier qu'il a suffisamment dévissé la vis de commande pour permettre le décrochage du panier.

L'accrochage de l'extrémité libre du panier dans l'ensemble d'arrimage selon l'invention peut être effectué d'une seule main, en soulevant l'extrémité libre du panier, ce mouvement provoquant automatiquement l'escamotage du crochet auxiliaire et l'accrochage de l'extrémité libre du panier dans le crochet principal dont l'extrémité d'accrochage est en appui sur l'extrémité d'accrochage du crochet auxiliaire.

## Revendications

1. Ensemble d'arrimage d'un panier (10) de roue de secours (12) de véhicule automobile monté basculant sous le plancher (14) du véhicule, du type comprenant un crochet principal (24) d'accrochage d'une extrémité libre (20) du panier, s'étendant sous le plancher (14) du véhicule, déplaçable verticalement en coopérant par vissage avec un organe de commande (28) traversant le plancher (14), et un crochet auxiliaire (26) d'aide à la manoeuvre du panier (10), fixé sous le plancher (14), caractérisé en ce que le crochet principal (24) est emboité dans le crochet auxiliaire (26) en étant déplaçable verticalement par rapport à ce dernier, entre une position haute d'arrimage du panier (10) et une position basse dans laquelle l'extrémité d'accrochage (38) du crochet principal (24) est en appui sur l'extrémité d'accrochage (58) du crochet auxiliaire (26).

2. Ensemble selon la revendication 1, caractérisé ce que le crochet auxiliaire (26) est déplaçable par basculement élastique entre une position de repos sensiblement verticale d'activation des crochets principal (24) et auxiliaire (26), et une position inclinée d'escamotage de ces crochets (24, 26), l'organe de commande (28) s'étendant à travers une ouverture oblongue de basculement de cet organe ménagée dans le plancher (14).

3. Ensemble selon la revendication 2, caractérisé en ce que l'extrémité d'accrochage (58) du crochet auxiliaire délimite une rampe d'escamotage (60) destinée à coopérer avec l'extrémité libre (20) du panier (10) lors de l'accrochage de celle-ci dans le crochet principal (24).

4. Ensemble selon l'une quelconque des revendications 1 à 3, caractérisé en ce que le crochet auxiliaire (26) comprend une tige métallique pliée en épingle à cheveux comportant deux branches (46) entre lesquelles est emboîté le crochet principal (24), les extrémités libres des branches formant des pattes (48) de fixation du crochet auxiliaire (26) sous le plancher (14), les branches (46) étant reliées entre elles par une boucle de liaison (58) formant extrémité d'accrochage.

5. Ensemble selon les revendications 2 et 4 prises ensemble, caractérisé en ce que les pattes de fixation (48) sont reliées au reste du crochet auxiliaire (26) par des coudes de fléchissement (54) permettant le basculement élastique de ce crochet (26).

6. Ensemble selon la revendication 4 ou 5, caractérisé en ce que chaque branche (46) comporte deux tronçons axiaux, supérieur (64) et inférieur (66), décalés transversalement, destinés à coopérer avec des contours complémentaires du crochet principal (24) pour guider axialement celui-ci.

7. Ensemble selon la revendication 6, caractérisé en ce que les tronçons axiaux inférieurs (66) sont destinés à coopérer avec des flancs axiaux (40) délimitant le corps (36) du crochet principal, séparés par une arête (42) axiale s'étendant entre les branches (46) du crochet auxiliaire (26), de manière à immobiliser le crochet principal (24) en rotation autour de son axe de vissage/dévissage.

8. Ensemble selon la revendication 7, caractérisé en ce que les tronçons axiaux inférieurs (66) sont convergents vers l'extrémité d'accrochage (58) du crochet auxiliaire (26), de manière à renforcer l'immobilisation en rotation du crochet principal (24).

9. Ensemble selon la revendication 7 ou 8, caractérisé en ce que les tronçons axiaux supérieurs (64) et inférieurs (66) sont reliés entre eux par des tronçons transversaux (68) destinés à coopérer avec des bords plats (70) délimitant les flancs axiaux (40), de manière à renforcer l'immobilisation en rotation du crochet principal (24).

10. Ensemble selon l'une quelconque des revendications 7 à 9, caractérisé en ce que l'extrémité d'accrochage (38) du crochet principal (24) comporte une saillie de centrage (44), prolongeant l'arête axiale (42), destinée à s'emboîter entre les branches du crochet auxiliaire (26).

11. Ensemble selon la revendication 3 et l'une quelconque des revendications 4 à 10, caractérisé en ce que la boucle de liaison (58) comprend une anse principale (60) formant la rampe d'escamotage du crochet auxiliaire (26), reliée aux deux branches (46) par deux anses secondaires (62) s'étendant à l'extérieur de l'espace médian séparant les deux branches (46), formant des doigts d'accrochage prolongeant la rampe d'escamotage (60).

12. Ensemble selon l'une quelconque des revendications 4 à 11, caractérisé en ce que les pattes de fixation (48) sont destinées à être fixées sous le plancher (14) par serrage entre une bride (50) formant plaque et le dessous du plancher (14), notamment au moyen d'un boulon (52) traversant le plancher (14) et la plaque (50).

13. Ensemble selon les revendications 2 et 12 prises ensemble, caractérisé en ce que l'organe de commande (28) s'étend à travers une ouverture oblongue de basculement (56) ménagée dans la bride (50), coïncidant avec l'ouverture oblongue du plancher (14).

14. Ensemble selon l'une quelconque des revendications précédentes, caractérisé en ce que le crochet principal (24) est fabriqué d'une seule pièce, en fonte, par moulage ou forgeage.

## Claims

1. Unit for securing a crate (10) for a car spare wheel (12) installed in tilting manner beneath the car floor (14), of the type comprising a main hook (24) for fastening a free crate end (20), extending beneath the car floor (14) and vertically displaceable on cooperating by screwing with a control member (28) traversing the floor (14), and an auxiliary hook (26) for assisting the manipulation of the crate (10) and fixed beneath the floor (14), characterized in that the main hook (24) is fitted into the auxiliary hook (26) being vertically displaceable with respect to the latter, between an upper securing position for the crate (10) and a lower position in which the fastening end (38) of the main hook (24) bears on the fastening end (58) of the auxiliary hook (26).

2. Unit according to claim 1, characterized in that the auxiliary hook (26) is displaceable by elastic tilting between a substantially vertical, rest position for activating the main (24) and auxiliary (26) hooks and an inclined retraction position of said hooks (24, 26), the control member (28) extending through an oblong opening for tilting said member located in the floor (14).

3. Unit according to claim 2, characterized in that the fastening end (58) of the auxiliary hook defines a retracting ramp (60) for cooperating with the free end (20) of the crate (10) during the fastening of the latter in the main hook (24).

4. Unit according to any one of the claims 1 to 3, characterized in that the auxiliary hook (26) comprises a metal rod bent in hairpin-like manner and having two branches (46), between which is fitted the main hook (24), the free ends of the branches forming fixing lugs (48) for the auxiliary hook (26) beneath the floor (14), the branches (46) being interconnected by a connecting loop (58) forming the fastening end.

5. Unit according to claims 2 and 4 considered together, characterized in that the fixing lugs (48) are connected to the remainder of the auxiliary hook (26) by deflection bends (54) permitting the elastic tilting of said hook (26).

6. Unit according to claim 4 or 5, characterized in that each branch (46) has two upper (64) and lower (66), transversely displaced, axial sections for cooperating with complimentary contours of the main hook (24) for axially guiding the latter.

7. Unit according to claim 6, characterized in that the lower, axial sections (66) cooperate with axial flanks (40) defining the main hook body (36) and separated by an axial edge (42) extending between the branches (46) of the auxiliary hook (26), so as to immobile the main hook (24) in rotation about its screwing/unscrewing axis.

8. Unit according to claim 7, characterized in that the lower, axial sections (66) converge towards the fastening end (58) of the auxiliary hook (26), so as to reinforce the immobilization in rotation of the main hook (24).

9. Unit according to claim 7 or 8, characterized in that the upper (64) and lower (66) axial sections are interconnected by transverse sections (68) cooperating with flat edges (70) defining axial flanks (40), so as to reinforce the immobilisation in rotation of the main hook (24).

10. Unit according to any one of the claims 7 to 9, characterized in that the fastening end (38) of the main hook (24) has a centring projection (44), extending the axial edge (42) and intended to be fitted between the branches of the auxiliary hook (26).

11. Unit according to claim 3 and any one of the claims 4 to 10, characterized in that the connecting loop (58) comprises a main shackle (60) forming the retracting ramp of the auxiliary hook (26), connected to the two branches (46) by two secondary shackles (62) extending outside the median space separating the two branches (46) and forming fastening fingers extending the retracting ramp (60).

12. Unit according to any one of the claims 4 to 11, characterized in that the fixing lugs (48) are intended to be fixed beneath the floor (14) by securing between a flange (50) forming a plate and the bottom of the floor (14), particularly by means of a bolt (52) passing through the floor (14) and the plate (50).

13. Unit according to claims 2 and 12 taken together, characterized in that the control member (28) extends through an oblong tilting opening (56) made in the flange (50) and coinciding with the oblong opening of the floor (14).

14. Unit according to any one of the preceding claims, characterized in that the main hook (24) is manufactured in one piece from cast iron by moulding or forging.

## Patentansprüche

1. Festhaltevorrichtung für einen Korb (10) eines Reserverades (12) eines Kraftfahrzeugs, die kippbar unter dem Boden (14) des Fahrzeugs montiert ist, bestehend aus einem Haupthaken (24) zum Festhaken eines freien Endes (20) des Korbes, der sich unter dem Boden (14) des Fahrzeugs erstreckt und vertikal verschiebbar ist, indem er durch Verschrauben mit einem Steuerelement (28) zusammenwirkt, das durch den Boden (14) geht, und einem Hilfshaken (26) für die Unterstützung der Bedienung des Korbes (10), der unter dem Boden (14) befestigt ist, dadurch gekennzeichnet, daß der Haupthaken (24) in dem Hilfshaken (26) eingesetzt ist, und zwar vertikal zu letztgenanntem zwischen einer oberen Festhalteposition des Korbes (10) und einer unteren Position verschiebbar, in der das Festhalteende (38) des Haupthakens (24) auf dem Festhalteende (58) des Hilfshakens (26) zum Anliegen kommt.

2. Vorrichtung nach Anspruch 1, dadurch gekennzeichnet, daß der Hilfshaken (26) durch elastisches Kippen zwischen einer im wesentlichen vertikalen Ruheposition für die Aktivierung des Haupt- (24) und Hilfshakens (26) und einer geneigten Einziehposition dieser Haken (24, 26) verschiebbar ist, wobei sich das Steuerelement (28) durch eine längsförmige Kippöffnung für dieses Element, die in dem Boden (14) ausgespart ist, erstreckt.

3. Vorrichtung nach Anspruch 2, dadurch gekennzeichnet, daß das Festhalteende (58) des Hilfshakens eine Einziehrampe (60) begrenzt, die dazu bestimmt ist, mit dem freien Ende (20) des Korbes (10) bei dem Festhaken desselben in dem Haupthaken (24) zusammenzuwirken.

4. Vorrichtung nach einem der Ansprüche 1 bis 3, dadurch gekennzeichnet, daß der Hilfshaken (26) eine metallische Stange umfaßt, die wie eine Haarnadel gebogen ist und zwei Schenkel (46) umfaßt, zwischen denen der Haupthaken (24) eingesetzt ist, wobei die freien Enden der Schenkel Befestigungsklauen (48) für den Hilfshaken (26) unter dem Boden (14) bilden, wobei die Schenkel (46) miteinander durch einen Verbindungsbügel (58) verbunden sind, der ein Festhalteende bildet.

5. Vorrichtung nach den Ansprüchen 2 und 4 gemeinsam, dadurch gekennzeichnet, daß die Befestigungsklauen (48) mit dem restlichen Hilfshaken (26) durch Biegekrümmungen (54) verbunden sind, die das elastische Kippen dieses Hakens (26) ermöglichen.

6. Vorrichtung nach Anspruch 4 oder 5, dadurch gekennzeichnet, daß jeder Schenkel (46) zwei axiale Abschnitte, einen oberen (64) und einen unteren (66), umfaßt, die quer versetzt sind und dazu bestimmt sind, mit komplementären Konturen des Haupthakens (24) zusammenzuwirken, um diesen axial zu führen.

7. Vorrichtung nach Anspruch 6, dadurch gekennzeichnet, daß die unteren axialen Abschnitte (66) dazu bestimmt sind, mit axialen Seitenflächen (40) zusammenzuwirken, die den Körper (36) des Haupthakens begrenzen und durch eine axiale Kante (42) getrennt sind, die sich zwischen den Schenkein (46) des Hilfshakens (26) erstreckt, um den Haupthaken (24) in der Drehung um seine Einschraub-/Herausschraubachse festzustellen.

8. Vorrichtung nach Anspruch 7, dadurch gekennzeichnet, daß die unteren axialen Abschnitte (66) zu dem Festhalteende (58) des Hilfshakens (26) hin konvergent sind, um das Feststellen des Haupthakens (24) in der Drehung zu verstärken.

9. Vorrichtung nach Anspruch 7 oder 8, dadurch gekennzeichnet, daß der obere (64) und der untere (66) axiale Abschnitt miteinander durch querliegende Abschnitte (68) verbunden sind, die dazu bestimmt sind, mit flachen Rändern (70) zusammenzuwirken, die die axialen Seitenflächen (40) begrenzen, um das Feststellen des Haupthakens (24) in der Drehung zu verstärken.

10. Vorrichtung nach einem der Ansprüche 7 bis 9, dadurch gekennzeichnet, daß das Festhalteende (38) des Haupthakens (24) einen Zentriervorsprung (44) umfaßt, der die axiale Kante (42) verlängert und dazu bestimmt ist, zwischen den Schenkeln des Hilfshakens (26) einzugreifen.

11. Vorrichtung nach Anspruch 3 und einem der Ansprüche 4 bis 10, dadurch gekennzeichnet, daß der Verbindungsbügel (58) einen Hauptbogen (60) umfaßt, der die Einziehrampe für den Hilfshaken (26) bildet und mit den beiden Schenkeln (46) durch zwei Nebenbögen (62) verbunden ist, die sich außerhalb des mittleren Raumes erstrecken, der die beiden Schenkel (46) trennt, und die Festhaltefinger bilden, die die Einziehrampe (60) verlängern.

12. Vorrichtung nach einem der Ansprüche 4 bis 11, dadurch gekennzeichnet, daß die Befestigungsklauen (48) dazu bestimmt sind, unter dem Boden (14) durch Festklemmen zwischen einem Flansch (50), der eine Platte bildet, und der Unterseite des Bodens (14) befestigt zu werden, insbesondere mit Hilfe eines Bolzens (52), der durch den Boden (14) und die Platte (50) hindurchgeht.

13. Vorrichtung nach den Ansprüchen 2 und 12 gemeinsam, dadurch gekennzeichnet, daß sich das Steuerelement (28) durch eine längsförmige Kippöffnung (56), die in dem Flansch (50) ausgespart ist und mit der längsförmigen Öffnung des Bodens (14) zusammenfällt, erstreckt.

14. Vorrichtung nach einem der vorhergehenden Ansprüche, dadurch gekennzeichnet, daß der Haupthaken (24) aus einem Gußstück durch Formgießen oder Schmieden hergestellt wurde.
